# EUROPÄISCHE PATENTSCHRIFT

(11) **EP 3 287 902 B1**
(45) Veröffentlichungstag und Bekanntmachung des Hinweises auf die Patenterteilung: **01.01.2020**
(21) Anmeldenummer: 17184470.7
(22) Anmeldetag: 02.08.2017
(51) Int. Cl.: G06F 11/14, G05D 1/00, G06F 11/18

(54) **FEHLERTOLERANTES VERFAHREN UND VORRICHTUNG ZUR STEUERUNG EINER AUTONOMEN TECHNISCHEN ANLAGE AUF DER BASIS EINES KONSOLIDIERTEN UMWELTMODELLS**
FAULT-TOLERANT METHOD AND DEVICE OF CONTROLLING AN AUTONOMOUS TECHNICAL PLANT ON THE BASIS OF A CONSOLIDATED ENVIRONMENTAL MODEL
PROCÉDÉ INSENSIBLE AUX DÉFAILLANCES ET DISPOSITIF DE COMMANDE D'UNE INSTALLATION TECHNIQUE AUTONOME SUR LA BASE D'UN MODÈLE ENVIRONNEMENTAL CONSOLIDÉ

(30) Priorität: 16.08.2016 AT 507382016
(43) Veröffentlichungstag der Anmeldung: 28.02.2018
(73) Patentinhaber: TTTech Auto AG, 1040 Wien (AT)
(72) Erfinder: POLEDNA, Stefan, 3400 Klosterneuburg (AT); NIEDRIST, Georg, 2353 Guntramsdorf (AT); SCHMIDT, Eric, 2143 Großkrut (AT); KOPETZ, Hermann, 2500 Baden (AT)
(74) Vertreter: Patentanwaltskanzlei Matschnig & Forsthuber OG

(56) Entgegenhaltungen:
- EP-A1- 2 587 378
- US-A1- 2015 012 166
- US-A1- 2016 033 965
- AMMANN P E ET AL: "DATA DIVERSITY: AN APPROACH TO SOFTWARE FAULT TOLERANCE", IEEE TRANSACTIONS ON COMPUTERS, IEEE, USA, Bd. 37, Nr. 4, 1. April 1988 (1988-04-01), Seiten 418-425, XP000648378, ISSN: 0018-9340, DOI: 10.1109/12.2185
- JUNSUNG KIM ET AL: "Towards dependable autonomous driving vehicles", ACM SIGBED REVIEW, ACM, 2 PENN PLAZA, SUITE 701 NEW YORK NY 10121-0701 USA, Bd. 10, Nr. 1, 1. Februar 2013 (2013-02-01), Seiten 29-32, XP058021545, DOI: 10.1145/2492385.2492390
- BODSON M ET AL: "Control reconfiguration in the presence of software failures", PROCEEDINGS OF THE CONFERENCE ON DECISION AND CONTROL. SAN ANTONIO, DEC. 15 - 17, 19; [PROCEEDINGS OF THE CONFERENCE ON DECISION AND CONTROL], NEW YORK, IEEE, US, Bd. CONF. 32, 15. Dezember 1993 (1993-12-15), Seiten 2284-2289, XP010116661, DOI: 10.1109/CDC.1993.325604 ISBN: 978-0-7803-1298-2

## Beschreibung

### Zitierte Literatur

### Patente:

[1] US Pat. Application 20160033965 *Device and Methodfor the Autonomous Control of Vehicles,* published Feb. 4, 2016

### Sonstige:

[2] *Wikipedia, Autonomes Fahren,* abgerufen am 11.8.2016
[3] *Wikipedia, Automotive Safety Integrity Levels ISO 26262,* abgerufen am 11.8.2016
[4] FAA, Advisory Circular System Safety Assessment for Part 23 Airplanes. URL: http://www.faa.gov/documentLibrary/media/Advisory_Circular/AC%2023.1309-1E.pdf abgerufen am 11.8.2016
[5] Avizienis, A. The N-Version Approach to Fault-Tolerant Software, IEEE Trans. on Software Engineering, Vol 11, pp. 1491-1501. Dez. 1985,
[6] Kopetz, H. Real-Time Systems, Design Principles for Distributed Embedded Applications. Springer Verlag. 2011.

### Technisches Umfeld

Die vorliegende Erfindung liegt im Bereich der Computertechnik. Sie betrifft ein Verfahren und eine Vorrichtung zur fehlertoleranten Steuerung einer autonomen technischen Anlage, insbesondere eines Fahrzeugs, das von einem mit Sensoren ausgestatteten verteilten Computersystems autonom durch die vorhandene Umgebung geleitet wird.

### Kurze Beschreibung der Erfindung

Die Entwicklungen der Sensortechnik und der Computertechnik ermöglichen die weitgehend autonome Steuerung einer technischen Anlage oder eines Fahrzeugs, das autonom sein Ziel ansteuert.

Laut Wikipedia [2] wird die Klassifizierung des *autonomen Fahrens* in sechs Stufen vorgenommen:
- ***Level 0:** "Driver only* ", *der Fahrer fährt selbst, lenkt, gibt Gas, bremst etc.*
- ***Level 1:** Bestimmte Assistenzsystem helfen bei der Fahrzeugbedienung (u.a. ACC*)*.*
- ***Level 2:** Teilautomatisierung. U.a. automatisches Einparken, Spurhaltefunktion, allgemeine Längsführung, beschleunigen, abbremsen etc. werden von den Assistenzsystemen übernommen (u.a. Stauassistent).*
- ***Level 3:** Hochautomatisierung. Der Fahrer muss das System nicht dauernd überwachen. Das Fahrzeug führt selbstständig Funktionen wie das Auslösen des Blinkers, Spurwechsel und Spurhalten durch. Der Fahrer kann sich anderen Dingen zuwenden, wird aber bei Bedarf innerhalb einer Vorwarnzeit vom System aufgefordert die Führung zu übernehmen. Diese Form der Autonomie ist auf Autobahnen technisch machbar. Der Gesetzgeber arbeitet daraufhin, Level 3-Fahrzeuge zuzulassen. Man spricht von einem Zeitrahmen bis 2020.*
- ***Level 4:** Vollautomatisierung. Die Führung des Fahrzeugs wird dauerhaft vom System übernommen. Werden die Fahraufgaben vom System nicht mehr bewältigt, kann der Fahrer aufgefordert werden, die Führung zu übernehmen.*
- ***Level 5:** Die völlige Autonomie des Fahrzeugs. Das Fahrzeug ist ohne Lenkrad ausgestattet, das Fahrzeug kann sich fahrerlos bewegen.*

In am Markt erhältlichen Fahrzeugen wird gegenwärtig der *Level* 2 realisiert. Bei Level 2 ist der Fahrer verpflichtet, die ordnungsgemäße Funktion des Computersystems kontinuierlich zu überwachen und im Fehlerfall sofort einzugreifen. Bei den höheren Automatisierungsstufen muss das Computersystem fehlertolerant ausgeführt sein, um die Sicherheit des Fahrzeugs auch bei einem Fehler im Computersystem zu gewährleisten.

In der ISO 26262 Norm wird ein *elektronisches System* (Hardware plus Software) in einem Fahrzeug einer von vier Integritätsstufen (Stufe ASIL A bis ASIL D) zugeordnet, wobei die Stufe ASIL D die höchste Integritätsstufe darstellt [3]. Die Integrität von *elektronischen Systemen* zur vollautomatisierten Fahrzeugsteuerung (Level 4 und Level 5) muss ASIL D entsprechen. Während bei ASIL B die Wahrscheinlichkeit für das Auftreten eines gefährlichen Fehlers der schwerwiegende Folgen für die Sicherheit eines Fahrzeugs hat kleiner sein muss als 10⁻⁶ pro Stunde (d.s. 10³ FIT), muss diese Wahrscheinlichkeit bei ASIL D kleiner sein als 10⁻⁸ pro Stunde (d.s. 10 FIT).

Die Ursache für das Auftreten eines Ausfalls eines *elektronisches System* kann ein Alterungsfehler (physical fault) der Hardware oder ein Entwurfsfehler (design fault) sein.

Ein Alterungsfehler liegt vor, wenn eine Baueinheit, die zu Beginn ihrer Lebenszeit voll funktionstüchtig war auf Grund von Alterungsprozessen der Hardware ausfällt. Bei *state of the art automotive chips* ist die permanente Fehlerrate für Alterungsfehler <100 FIT. Durch den Einsatz von aktiver Redundanz (TMR oder self-checking components) kann die geforderte Fehlerrate von ASIL D (kleiner als 10) FIT in der Hardware erreicht werden.

Entwurfsfehler können in der Hardware oder in der Software enthalten sein. Die Folgen von Hardware Entwurfsfehler können durch aktive Redundanz von diversitärer Hardware beherrscht werden.

Maßnahmen die zu einer Reduktion der Wahrscheinlichkeit für das Vorhandensein eines unentdeckten Entwurfsfehlers in der Software führen sind ein systematischer Entwurfsprozess, Verifikation und Validierung, vor allem durch umfangreiches Testen. Eine wesentliche Ursache für das Auftreten von Entwurfsfehlern in der Software liegt in der Komplexität der Software. Entsprechend dem *State-of-the-Art* ist es möglich ein *komplexes Softwaresystem* so gründlich zu validieren, dass die geforderte Fehlerrate von ASIL B, nicht jedoch von ASIL D erreicht werden kann.

Die vorliegende Erfindung legt ein Verfahren und eine Hardware-Architektur zur Erhöhung der Zuverlässigkeit eines *komplexen elektronischen Systems* offen. Durch den gezielten Einsatz von Hardware- und Softwareredundanz wird die Zuverlässigkeit des *elektronischen Systems* signifikant erhöht.

Im Bereich der Sicherheitstechnik in der Luft und Raumfahrt wird zwischen *einfacher* und *komplexer* Software unterschieden [4]. Wenn die Software, die zum Einsatz kommt, *einfach* ist und formal überprüft und/oder umfassend getestet werden kann, so wird angenommen, dass die geforderte Fehlerrate von ASIL D durch einen sorgfältigen Entwicklungsprozess erreicht werden kann.

Wenn die Software, die zum Einsatz kommt *komplex* ist so nehmen wir an dass die Wahrscheinlichkeit für das Auftreten von Entwurfsfehlern ASIL B entspricht. Durch Softwareredundanz, d.h. die parallele Ausführung von zwei oder mehr diversitären ASIL B Software-Systemen mit einem anschließenden anwendungsspezifischen Vergleich der Ergebnisse kann die Zuverlässigkeit der Software signifikant erhöht werden. Ein Verfahren zur Erhöhung der Softwarezuverlässigkeit durch aktive Redundanz (TMR) mittels diversitärer Software ist in [5] beschrieben. Dieses Verfahren ist jedoch nicht einsetzbar wenn sich die diversitären Software Versionen nicht *replika deterministisch* verhalten.

Diversitäre Software ist nicht *replika deterministisch* wenn in der Software ein *Non-Deterministic Design Construct* (NDDC) [6, p128] vorhanden ist. Ein NDDC entscheidet zwischen zwei richtigen aber nicht kompatiblen Szenarien. Im Allgemeinen darf nicht angenommen werden dass zwei diversitäre Versionen der Software mit NDDCs zu vergleichbaren Ergebnissen kommen.

Wenn z.B. auf einer Straße ein Felsbrocken liegt und die Entscheidung zu treffen ist, ob dieser Felsbrocken von einem Fahrzeug links oder rechts umfahren werden soll, so kann im Allgemeinen nicht angenommen werden, dass zwei diversitäre Software Versionen zu dem gleichen Ergebnis kommen. Obwohl beide Ergebnisse richtig sind, sind sie nicht *replika deterministisch.* Dadurch geht die Fehlertoleranz verloren.

Die autonome Führung eines Kraftfahrzeugs erfordert ein Softwaresystem zur Bilderkennung, Umweltmodellbildung und Trajektorenplanung. Die Software zur Bilderkennung und Umweltmodellbildung ist sehr komplex. Die DE102013213169A1 beschreibt, wie Umweltmodelle zu verarbeiten sind, damit eine hohe Ausfallsicherheit und Betriebszuverlässigkeit bei der Steuerung eines autonomen Kraftfahrzeugs ermöglich wird. Die US2016/0033965 offenbart die parallele Verarbeitung von Sensordaten, um Umweltmodelle Fehlertolerant zu erstellen.

Erfindungsgemäß wird vorgeschlagen mindestens zwei diversitäre Versionen der komplexen Software zur Bilderkennung und Umweltmodellbildung zu realisieren und die Ergebnisse dieser Versionen zu konsolidieren um die Trajektorenplanung auf der Basis eines einheitlichen konsolidierten Umweltmodells durchführen zu können.

Im Falle dass die Trajektorenplanung mittels einer einfachen Software realisiert werden kann wird vorgeschlagen eine einzige Softwareversion der Trajektorenplanung auf einer fehlertoleranten Hardware auszuführen.

Im Falle dass die Software zur Trajektorenplanung nicht einfach, sondern komplex ist wird vorgeschlagen mindestens zwei diversitäre Versionen der Trajektorenplanung zu realisieren und die Ergebnisse dieser mehrfachen Trajektorenplanung einer Entscheidungsinstanz zur Festlegung einer einzigen konsolidierten Trajektorie zu übergeben.

Erfindungsgemäß wird auch vorgeschlagen die im gesamten Softwaresystem enthaltenen NDDCs zu identifizieren und aus dem Softwaresystem herauszulösen. Ein NDDC das eine Entscheidung zwischen vorgelegten Alternativen vornimmt wird mittel einer *einfachen Software* ohne Softwareredundanz realisiert. Die *einfache Software* wird auf einer fehlertoleranten Hardware ausgeführt, um auftretende Hardwarefehler zu maskieren.

Die Zuverlässigkeit der *komplexen Software ohne NDDCs* wird durch den Vergleich der Ergebnisse von mehreren diversen Versionen der komplexen Software signifikant erhöht. Die *komplexe Software* ermittelt mehrere Alternativen, die den NDDCs zur Entscheidung übergeben werden.

### Zusammenfassung

Die vorliegende Erfindung, die durch die unabhängigen Ansprüche 1 und 12 definiert wird, beschreibt ein innovatives Verfahren wie ein komplexes elektronisches System zur Steuerung eines sicherheitskritischen technischen Prozesses, z.B. die Führung eines autonomen Fahrzeugs, realisiert werden kann. Es wird zwischen einfacher und komplexer Software unterschieden, wobei die einfache Software auf einer fehlertoleranten Hardware ausgeführt wird und wo mehrere diversitäre Versionen der komplexen Software gleichzeitig auf unabhängigen Fault-Containment Units (FCU) ausgeführt werden. Aus einer Anzahl von diversitären Umweltmodellen wird ein konsolidiertes Umweltmodell entwickelt dass die Grundlage für die Traj ektorenplanung darstellt.

### Kurze Beschreibung der Zeichnungen

Die vorliegende Erfindung wird an Hand der folgenden Zeichnungen genau erklärt.
Fig. 1 zeigt ein Datenflussdiagramm eines *komplexen elektronischen Systems* zur autonomen Steuerung eines Fahrzeugs mit diversitärer Umweltmodellbildung und nicht redundanter Trajektorenplanung.
Fig. 2 zeigt Datenflussdiagramm eines *komplexen elektronischen Systems* zur autonomen Steuerung eines Fahrzeugs mit diversitärer Umweltmodellbildung und mit diversitärer Trajektorenplanung.

### Beschreibung einer Realisierung

Die folgende konkrete Beschreibung einer Realisierung behandelt eine der vielen möglichen Realisierungen des neuen Verfahrens am Beispiel eines autonomen Fahrzeugsteuerungssystems. Die Beschreibung verwendet Begriffe, die im Folgenden genau umschrieben sind.

Ein *kontrolliertes Objekt (controlled object, abgekürzt CO)* ist eine *technische Anlage* die von einem Computersystem und/oder einen Menschen gesteuert wird, mit dem Ziel im Laufe der Zeit die vorgegebene Aufgabenstellung unter den gegebenen Umweltbedingungen zu erfüllen. Beispiele für COs sind: ein Fahrzeug, ein Flugzeug, eine Landmaschine, ein Roboter, oder eine Drohne.

Ein *Umweltmodell* ist eine digitale Datenstruktur, die zu einem gegebenen Zeitpunkt ein Abbild der für die vorgegebene Aufgabe wesentlichen Charakteristika der Umwelt darstellt. Ein Beispiel für ein Umweltmodell ist die Beschreibung einer Straße und der zum gewählten Zeitpunkt auf der Straße befindlichen Objekte.

Eine *Trajektorie* ist ein Pfad den ein CO im Laufe der Zeit ausführen kann um die vorgegebene Aufgabe zu erfüllen. Die Charakteristika der *Trajektorien* eines CO hängen von der Konstruktion des CO, der vorgegebenen Aufgabenstellung und den aktuellen Umweltbedingungen ab. Zum Beispiel bezeichnet man einen möglichen Weg den ein Fahrzeug unter den gegebenen Umweltbedingungen ausführen kann um sein Ziel zu erreichen, als *Trajektorie.*

Unter einem *Softwareprozess* wird die Ausführung eines Programmsystems auf einen oder mehreren Computers verstanden.

Eine *Fault Containment Unit (FCU)* ist eine Baueinheit die die unmittelbaren Folgen einer Fehlerursache abkapselt (6, p155)
Unter dem Begriff *fehlertolerante Hardware* wird eine Hardwarearchitektur verstanden, die auftretende Hardwarefehler entsprechend der vorliegenden Fehlerhypothese maskiert. Beispiele für solche Hardwarearchitekturen sind Triple-Modulare Redundanz (TMR) oder die parallele Ausführung der Software auf self-checking Baueinheiten wie in (6, p.156) beschrieben. Es entspricht dem *State-of-the-art,* dass die redundanten FCUs über mindestens zwei unabhängige Kommunikationskanäle ihre Eingangsdaten empfangen und über mindestens zwei unabhängige Kommunikationskanäle ihre Ausgabedaten weitergeben
Ein *Datenflusspfad (DFP)* ist eine Aufeinanderfolge von Softwareprozessen, wobei der erste Softwareprozess Eingabedaten liest und die Ausgabedaten eines vorgelagerten Softwareprozesses die Eingabedaten für den folgenden Softwareprozess darstellen. Die Ausgabedaten des letzten Softwareprozesses sind die Ergebnisdaten des DFP. In vielen Anwendungsfällen der Echtzeitdatenverarbeitung wird ein DFP zyklisch durchlaufen. Zwischen den Zyklen eines DFP kann der innere Zustand [6, p.84] eines Softwareprozesses gespeichert werden. In vielen Anwendungsfällen der Echtzeitdatenverarbeitung übernimmt der erste Softwareprozess eines DFP die Sensordaten und produziert der letzte Softwareprozess eines DFP die Sollwerte für die Aktuatoren.

Zwei DFPs sind *diversitär,* wenn sie die gleiche Zielsetzung verfolgen, aber die Softwareprozesse der DFPs unterschiedliche Algorithmen (*Algorithmen-Diversität*) und/oder unterschiedliche Eingabedaten (*Daten-Diversität*) verwenden.

Eine *Umweltmodellbildung* ist ein Softwareprozess, der ausgehend von den statischen Daten der Umwelt und den von diversen Sensoren erfassten dynamischen Daten der Umwelt ein Umweltmodell erstellt.

Ein *konsolidiertes Umweltmodell* ist ein Umweltmodell, das eine Anzahl von unabhängig erstellten Umweltmodellen in ein einziges Umweltmodell integriert.

Eine *Trajektorenplanung* ist ein Softwareprozess, der auf der Basis eines gegebenen Modells der Umwelt eine oder mehrere mögliche Trajektorien festlegt, die die vorgegebene Aufgabe lösen.

Eine *Entscheidungsinstanz* ist ein Softwareprozess, der eine Anzahl von Vorschlägen als Eingabedaten erhält, diese Vorschläge analysiert und die Freiheit hat eine Entscheidung zu treffen welcher - möglicherweise abgeänderter - Vorschlag ausgewählt wird. In vielen Fällen ist eine Entscheidungsinstanz ein NDDC. Zum Beispiel erhält eine Entscheidungsinstanz eine Anzahl von Vorschlägen möglicher Trajektorien eines Fahrzeugs als Eingabe und entscheidet sich für eine - möglicherweise abgeänderte - Trajektorie die zur Ausführung gebracht wird.

Beispielsweise können unter "beobachtete Daten" die Daten, die sich aus der Beobachtung ergeben, verstanden werden.

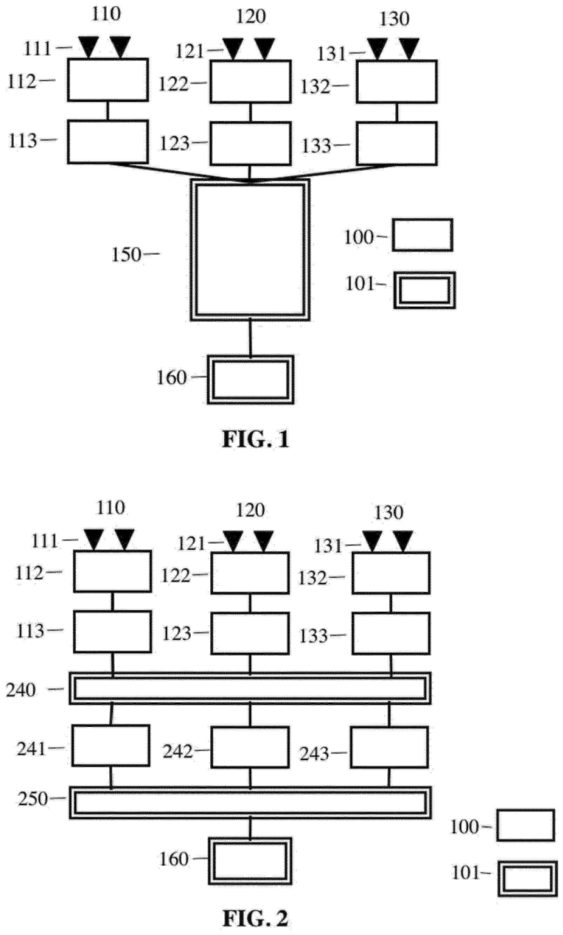

Fig. 1 zeigt ein Datenflussdiagramm eines *komplexen elektronischen Systems* zur autonomen Steuerung eines Fahrzeugs. Die einfach umrahmten Kästchen **100** zeigen Softwareprozesse, die auf einer nicht redundanten Hardware zur Ausführung gelangen. Die doppelt umrahmten Kästchen **101** zeigen Softwareprozesse, die auf einer fehlertoleranten Hardware zur Ausführung gelangen. Die senkrechten Verbindungslinien zwischen den Kästchen von Fig. 1 zeigen den Datenfluss von oben nach unten.

In Fig. 1 sind drei diversitären DFPs **110, 120** und **130** dargestellt. Jeder der DFPs verfügt über eigene Sensoren zur Beobachtung der Umwelt des Fahrzeugs. Die Sensoren werden zyklisch ausgelesen. DFP **110** hat die Sensoren **111,** DFP **120** hat die Sensoren **121** und DFP **130** hat die Sensoren **131.** Beispiele für Sensoren eines Fahrzeugs sind Kameras, Radarsensor, LIDAR Sensoren und Ultraschallsensoren. In der ersten Verarbeitungsstufe des DFP werden die rohen Sensordaten ausgelesen und vorverarbeitet. Das ist in DFP **110** der Softwareprozess **112,** in DFP **120** der Softwareprozess **122** und in DFP **130** der Softwareprozess **132.**

Es ist vorteilhaft wenn die Softwareprozesse **112, 122** und **132** unterschiedliche Algorithmen (Algorithmen-Diversität) verwenden die mit unterschiedlichen Eingabedaten versorgt werden (Daten-Diversität).

Es ist vorteilhaft, wenn die Sensoren **111, 121** und **131** die Umgebung gleichzeitig beobachten. Die gleichzeitige Beobachtung kann von einem von einer fehlertoleranten globalen Zeit abgeleiteten verteilten Trigger-signal erreicht werden.

In der zweiten Verarbeitungsstufe des DFP wird auf der Basis der empfangene Sensordaten und Informationen über die statischen Parameter der Umwelt (z.B. aus dem vorliegenden Kartenmaterial des Navigationssystems) die Umweltmodellbildung vollzogen. Das ist in DFP **110** der Softwareprozess **113,** in DFP **120** der Softwareprozess **123** und in DFP **130** der Softwareprozess **133.**

Es ist vorteilhaft wenn die Softwareprozesse **113, 123** und **133** unterschiedliche Algorithmen (Algorithmen-Diversität) verwenden die mit unterschiedlichen Eingabedaten versorgt werden (Daten-Diversität).

In Fig. 1 wird angenommen, dass die Software zur Trajektorenplanung einfach ist und daher ohne Software Diversität realisiert werden kann. In der dritten Verarbeitungsstufe **150** der Fig. 1 wird zuerst aus den diversen empfangenen Umweltmodellen ein einheitliches konsolidiertes Umweltmodell erstellt das die Basis für die folgende nicht-redundante Trajektorenplanung darstellt. Die Trajektorenplanung ermittelt die Sollwerte für die intelligente Aktuatorsteuerung **160.** Die Softwareprozesse der Verarbeitungsstufe **150** und der Aktuatorsteuerung **160** werden auf einer fehlertoleranten Hardware ausgeführt.

In Fig. 2 wird angenommen, dass die Software zur Trajektorenplanung komplex ist und daher nicht ohne Software Diversität realisiert werden kann. In der Verarbeitungsstufe **240** der Fig. 2 wird zuerst aus den diversen empfangenen Umweltmodellen ein einheitliches konsolidiertes Umweltmodell erstellt das die Basis für die folgende nicht-redundante Trajektorenplanung darstellt. Die Verarbeitungsstufe **240** wird auf einer fehlertoleranten Hardware ausgeführt.

In den folgenden parallelen Verarbeitungsstufen **241, 242** und **243** werden mehrere diversitäre Versionen der Trajektorenplanung ausgeführt. Jede Version der Trajektorenplanung ermittelt eine oder mehrere Trajektorien und bewertet die ermittelten Trajektorien in Bezug auf Effektivität zur Zielerreichung und Sicherheit.

Die Entscheidungsinstanz **250** erhält somit mehre diverse bewertete Vorschläge für Trajektorien der Trajektorenplanung **241, 242** und **243** und entscheidet sich für eine Trajektorie, die von mindestens zwei der drei Planungsprozesse **241, 242** und **243** vorgeschlagen und angemessen bewertet wurde. Anschließend werden von der Entscheidungsinstanz **250** die Sollwerte zur Realisierung der ausgewählten Trajektorie ermittelt und an die intelligente Aktuatoren **160** übergeben. Die Entscheidungsinstanz **250** wird auf einer fehlertoleranten Hardware ausgeführt.

Es ist vorteilhaft, wenn die Übermittlung der Vorschläge für Trajektorien der Softwareprozesse **114, 124** und **134** an die Entscheidungsinstanz **250** nahezu gleichzeitig erfolgt. Dies kann durch die Ableitung der Triggersignale für Aktionen vom Fortschreiten einer fehlertoleranten globalen Zeit erreicht werden.

Im folgenden Abschnitt wird Beispiel für eine andere Strategie beschrieben. Während die Trajektorenplanung **241** und die Trajektorenplanung **242** die gleiche Aufgabenstellung verfolgen - die Führung des Fahrzeuges zu dem geplanten Ziel - hat die Trajektorenplanung **243** die Aufgabenstellung das Fahrzeug schnellst-möglich in einen sicheren Zustand zu führen, z.B. Abstellen am Straßenrand. Wenn die Entscheidungsinstanz **250** keine Trajektorie findet, die mit einer der angebotenen Alternativen von **241** und der **242** in Einklang ist, so übernimmt die Entscheidungsinstanz **250** den Vorschlag von **243** und gibt Sollwerte an die Aktuatoren **260** die das Fahrzeug in einen sicheren Zustand führen (z.B. Parken am Straßenrand).

Die Diversität der komplexen Software kann entweder durch *Daten-Diversität* oder durch *Algorithmen-Diversität* oder durch beide *Daten-Diversität* und *Algorithmen-Diversität* erreicht werden. Es ist großem Vorteil, wenn sowohl *Daten-Diversität* wie auch *Algorithmen-Diversität* realisiert wird.

Wenn aus ökonomischen Gründen nur eine Diversität angewendet wird, so bieten sich einige Möglichkeiten der Kostenreduktion.

Wenn auf die *Daten-Diversität* verzichtet wird kann ein Sensor die erfassten Daten an mehrere diversitäre Softwareprozesse übergeben. Datendiversität kann auch durch eine Transformation der Modelldarstellung - z.B. die Darstellung der Trajektorien in unterschiedlichen Koordinatensystemen - erreicht werden.

Wenn auf die *Algorithmen Diversität* verzichtet wird können alle Softwareprozesse dieselben Algorithmen verwenden.

Im laufenden Betrieb ist es sehr schwierig zu entscheiden ob eine festgestellte Abweichung eines Resultats einer DFP von den beiden anderen DFPs auf Grund eines Alterungsfehlers in der Hardware oder eines Softwarefehlers verursacht wurde. Diese Unterscheidung ist jedoch im Augenblick des Auftretens des Fehlers unwesentlich, da die vorgeschlagene Architektur beide Fehlerarten maskiert.

## Patentansprüche

1. Verfahren zur Steuerung eines technischen Prozesses, der in einer sich verändernden Umgebung eingebettet ist, wobei das die Steuerung durchführende elektronische System Sensoren, insbesondere eine Vielzahl von Sensoren, Aktuatoren und Knotenrechner, insbesondere eine Vielzahl von Knotenrechnern, die über ein Echtzeitkommunikationssystem Daten austauschen, umfasst, wobei *zwischen komplexer* und *einfacher Software* unterschieden wird, und wobei die *komplexe Software* auf mindestens zwei unabhängigen Datenflusspfaden (DFP) **(110, 120)** gleichzeitig ausgeführt wird, wobei jeder DFP mit Sensoren den technischen Prozess und dessen Umgebung zyklisch beobachtet und aus sogenannten "beobachteten" Daten, das sind Daten, die sich aus der Beobachtung des technischen Prozesses und dessen Umgebung ergeben, mittels Algorithmen ein Umweltmodell des technischen Prozesses erstellt, wobei
- die beobachteten Daten diversitär und die in den DFP eingesetzten Algorithmen diversitär sind, oder
- die beobachteten Daten nicht diversitär und die in den DFP eingesetzten Algorithmen diversitär sind, oder
- die beobachteten Daten diversitär und die in den DFP eingesetzten Algorithmen nicht diversitär sind, **dadurch gekennzeichnet, dass** bei der komplexen Software die Wahrscheinlichkeit für ein Auftreten von Entwurfsfehlern ASIL B entspricht, und bei der einfachen Software eine Fehlerrate wie von ASIL D gefordert erreicht wird, und **dass** aus mehreren unterschiedlichen *Umweltmodellen,* die jeweils mit einem DFP **(110, 120)** ermittelt wurden, mittels einer einfachen Software ein einziges *konsolidiertes Umweltmodell* für eine Trajektorenplanung aufgebaut wird, wobei diese *einfache* Software auf einer fehlertoleranten Hardware ausgeführt wird.

2. Verfahren nach Anspruch 1, **dadurch gekennzeichnet, dass** im Falle, dass die Software für die Trajektorenplanung *einfach* ist, eine nicht-redundante *Trajektorenplanung* in dem konsolidierten Modell der Umwelt eine Trajektorie festlegt und die dieser Trajektorie entsprechenden Sollwerte an eine, vorzugsweise intelligente, Aktuatorsteuerung übergibt.

3. Verfahren nach Anspruch 1, **dadurch gekennzeichnet, dass** im Falle, dass die Software für die Trajektorenplanung *komplex* ist, mindestens zwei diversitäre *Trajektorenplanungen* **(241, 242, 243)** in dem *konsolidierten Umweltmodell* eine oder mehrere Trajektorien zur Zielerreichung festlegen und diese Trajektorien einer *einfachen* Entscheidungsinstanz **(150, 250)** zur Auswahl übergeben.

4. Verfahren nach einem der Ansprüche 3, **dadurch gekennzeichnet, dass** die *Trajektorenplanungen* **(241, 242, 243)** die ermittelten Trajektorien aus der Sicht der Zielerreichung und Sicherheit bewerten.

5. Verfahren nach Anspruch 3 oder 4, **dadurch gekennzeichnet, dass** die Entscheidungsinstanz **(150, 250)** eine Trajektorie auswählt, die von mindestens zwei *Trajektorenplanungen* vorgeschlagen wird, wobei die Entscheidungsinstanz **(150, 250)** die Sollwerte für die Aktuatoren errechnet und an eine, vorzugsweise intelligente, Aktuatorsteuerung **(160)** übergibt.

6. Verfahren nach einem der Ansprüche 3 bis 5, **dadurch gekennzeichnet, dass** die Trajektorenplanung auf einer fehlertoleranten Hardware ausgeführt werden.

7. Verfahren nach einem der Ansprüche 3 bis 6, **dadurch gekennzeichnet, dass** die Entscheidungsinstanz **(150, 250)** auf einer fehlertoleranten Hardware ausgeführt wird.

8. Verfahren nach einem der Ansprüche 1 bis 7, **dadurch gekennzeichnet, dass** auf Daten-Diversität der DFPs verzichtet wird und die von den Sensoren erfassten Daten an mehrere DFPs übergeben werden.

9. Verfahren nach einem der Ansprüche 1 bis 8, **dadurch gekennzeichnet, dass** auf Algorithmen-Diversität der DFPs verzichtet wird und in allen DFPs dieselben Algorithmen zum Einsatz kommen.

10. Verfahren nach einem der Ansprüche 1 bis 8, **dadurch gekennzeichnet, dass** die *Daten Diversität* durch den Einsatz unterschiedlicher Koordinatensysteme in den diversitären Softwareprozessen erreicht wird.

11. Verfahren nach einem der Ansprüche 1 bis 10, **dadurch gekennzeichnet, dass** Baueinheiten, das sind z.B. die Knotenrechner, das Kommunikationssystem, Sensoren, Aktuatoren, vorzugsweise alle Baueinheiten, Zugriff auf eine fehlertolerante globale Zeit haben und die Kontrolle des Datenflusses zwischen den Knotenrechnern vom Fortschreiten der globalen Zeit abgeleitet wird.

12. Elektronisches System zur Steuerung eines technischen Prozesses, der in einer sich verändernden Umgebung eingebettet ist, wobei das elektronische System Sensoren, insbesondere eine Vielzahl von Sensoren, Aktuatoren und Knotenrechner, insbesondere eine Vielzahl von Knotenrechnern, die über ein Echtzeitkommunikationssystem Daten austauschen, umfasst, wobei *komplexe* und *einfache Software* vorgesehen ist, wobei die *komplexe Software* auf mindestens zwei unabhängigen Datenflusspfaden (DFP) **(110, 120)** gleichzeitig ausgeführt wird, wobei jeder DFP dazu eingerichtet ist, mit Sensoren den technischen Prozess und dessen Umgebung zyklisch zu beobachten und aus den beobachteten Daten mittels Algorithmen ein Umweltmodell des technischen Prozesses zu erstellen, wobei
- die beobachteten Daten diversitär und die in den DFP eingesetzten Algorithmen diversitär sind, oder
- die beobachteten Daten nicht diversitär und die in den DFP eingesetzten Algorithmen diversitär sind, oder
- die beobachteten Daten diversitär und die in den DFP eingesetzten Algorithmen nicht diversitär sind, **dadurch gekennzeichnet, dass** bei der komplexen Software die Wahrscheinlichkeit für ein Auftreten von Entwurfsfehlern ASIL B entspricht, und bei der einfachen Software eine Fehlerrate wie von ASIL D gefordert erreicht wird, und dass die einfache Software dazu eingerichtet ist, aus mehreren unterschiedlichen *Umweltmodellen,* die von den DFPs ermittelt wurden, ein einziges *konsolidiertes Umweltmodell* für die Trajektorenplanung aufzubauen, wobei diese *einfache* Software auf einer fehlertoleranten Hardware ausgeführt wird.

## Claims

1. A method for controlling a technical process, which is embedded in a changing environment, wherein the electronic system executing said control comprises sensors, in particular a plurality of sensors, actuators and node processors, in particular a plurality of node processors that exchange data via a real-time communication system, wherein
a distinction is made *between complex* and *simple software,* and
wherein the *complex software* is executed simultaneously on at least two independent data flow paths (DFP) (110, 120), wherein each DFP cyclically observes the technical process and its environment with sensors and generates from so-called "observed" data, i.e. data resulting from the observation of the technical process and its environment, an environment model of the technical process by means of algorithms, wherein
- the observed data are diverse and the algorithms implemented in the DFPs are diverse, or
- the observed data are not diverse and the algorithms implemented in the DFPs are diverse, or
- the observed data are diverse and the algorithms implemented in the DFPs are not diverse, **characterized in that**, for the complex software, the probability of an occurrence of design errors corresponds to ASIL B and, for the simple software, an error rate as required by ASIL D is achieved,
and **in that** a single *consolidated environment model* for trajectory planning is constructed by means of a simple software from a plurality of different *environment models* respectively determined with one DFP (110, 120), wherein this *simple* software is executed on fault-tolerant hardware.

2. The method according to claim 1, **characterized in that**, in cases where the software for the trajectory planning is *simple,* a non-redundant *trajectory planning* in the consolidated model of the environment determines a trajectory and submits the target values corresponding to this trajectory to a, preferably intelligent, actuator control unit.

3. The method according to claim 1, **characterized in that**, in cases where the software for the trajectory planning is *complex,* at least two diverse *trajectory plannings* (241, 242, 243) in the *consolidated environment model* determine one or more trajectories for reaching a destination and submit these trajectories to a *simple* decision-making entity (150, 250) for selection.

4. The method according to claim 3, **characterized in that** *the trajectory plannings* (241, 242, 243) evaluate the determined trajectories from the standpoint of destination arrival and safety.

5. The method according to claim 3 or 4, **characterized in that** the decision-making entity (150, 250) selects a trajectory that is proposed by at least two *trajectory plannings,* wherein the decision-making entity (150, 250) calculates the target values for the actuators and submits the same to a, preferably intelligent, actuator control unit (160).

6. The method according to one of claims 3 to 5, **characterized in that** the trajectory plan is executed on fault-tolerant hardware.

7. The method according to one of claims 3 to 6, **characterized in that** the decision-making entity (150, 250) is executed on fault-tolerant hardware.

8. The method according to one of claims 1 to 7, **characterized in that** a data diversity of the DFPs is omitted and the data captured by the sensors is submitted to a plurality of DFPs.

9. The method according to one of claims 1 to 8, **characterized in that** an algorithm diversity of the DFPs is omitted and the same algorithms are implemented in all DFPs.

10. The method according to one of claims 1 to 8, **characterized in that** the *data diversity* is achieved through the implementation of different coordinate systems in the diverse software processes.

11. The method according to one of claims 1 to 10, **characterized in that** assembly units, i.e., for example, the node processor, the communication system, sensors, actuators, preferably all assembly units, have access to a fault-tolerant global time and the control of the data flow between the node processors is derived from the progression of the global time.

12. An electronic system for controlling a technical process, which is embedded in a changing environment, wherein the electronic system comprises sensors, in particular a plurality of sensors, actuators and node processors, in particular a plurality of node processors that exchange data via a real-time communication system, wherein
*complex* and *simple software* is provided, wherein the *complex software* is executed simultaneously on at least two independent data flow paths (DFP) (110, 120), wherein each DFP is adapted to observe the technical process and its environment cyclically with sensors and to generate an environment model of the technical process from the observed data by means of algorithms, wherein
- the observed data are diverse and the algorithms implemented in the DFPs are diverse, or
- the observed data are not diverse and the algorithms implemented in the DFPs are diverse, or
- the observed data are diverse and the algorithms implemented in the DFP are not diverse, **characterized in that**, for the complex software, the probability of an occurrence of design errors corresponds to ASIL B and, for the simple software, an error rate as required by ASIL D is achieved,
and **in that** the simple software is adapted to construct a single *consolidated environment model* for the trajectory planning from a plurality of different *environment models* determined by the DFPs, wherein this *simple* software is executed on fault-tolerant hardware.

## Revendications

1. Procédé de commande d'un processus technique, qui est incorporé dans un environnement variable, sachant que la commande, comprend un système électronique exécutant de capteurs, notamment une pluralité de capteurs, d'actionneurs et d'ordinateurs de jonction, notamment une pluralité d'ordinateurs de jonction, qui échangent des données par le biais d'un système de communication en temps réel, sachant qu'il y a une différence entre le logiciel complexe et le logiciel simple, et sachant que le logiciel complexe est simultanément exécuté sur au moins deux chemins de flux de données (CFD) indépendants (110, 120), sachant que chaque CFD observe de façon cyclique avec des capteurs le processus technique et l'environnement de celui-ci et établit au moyen d'algorithmes à partir des données dites « observées », qui sont des données qui résultent de l'observation du processus technique et de l'environnement de celui-ci, un modèle environnemental du processus technique, sachant que
- les données observées sont diversitaires et les algorithmes utilisés dans les CFD sont diversitaires, ou
- les données observées ne sont pas diversitaires et les algorithmes utilisés dans les CFD sont diversitaires, ou
- les données observées sont diversitaires et les algorithmes utilisés dans les CFD ne sont pas diversitaires, **caractérisé en ce que** pour le logiciel complexe, la probabilité de la survenance de défaillances de projet correspondant à ASIL.B et pour le logiciel simple, un taux de défaillances est atteint comme exigé par ASIL.D et
**en ce qu'**à partir de plusieurs modèles environnementaux différents, qui ont été respectivement déterminés avec un CFD (110, 120), un modèle environnemental consolidé unique est établi pour une planification de trajectoire au moyen d'un logiciel simple, sachant que ce logiciel simple est exécuté sur un matériel insensible aux défaillances.

2. Procédé selon la revendication 1, **caractérisé en ce qu'**au cas où le logiciel est simple pour la planification de trajectoire, une planification de trajectoire non redondante fixe une trajectoire dans le modèle consolidé de l'environnement et transmet les valeurs théoriques correspondant à cette trajectoire à une commande d'actionneur de préférence intelligente.

3. Procédé selon la revendication 1, **caractérisé en ce qu'**au cas où le logiciel est complexe pour la planification de trajectoire, au moins deux planifications de trajectoires diversitaires (241, 242, 243) déterminent dans le modèle environnemental consolidé une ou plusieurs trajectoires pour l'atteinte des objectifs et transmettent ces trajectoires à une instance de décision simple (150, 250) pour sélection.

4. Procédé selon la revendication 3, **caractérisé en ce que** les planifications de trajectoire (241, 242, 243) exploitent les trajectoires déterminées du point de vue de l'atteinte des objectifs et de la sécurité.

5. Procédé selon la revendication 3 ou 4, **caractérisé en ce que** l'instance de décision (150, 250) sélectionne une trajectoire, qui est proposée par au moins deux planifications de trajectoire, sachant que l'instance dé décision (150, 250) calcule les valeurs théoriques pour les actionneurs et transmet à une commande d'actionneur (160) de préférence intelligente.

6. Procédé selon l'une quelconque des revendications 3 à 5, **caractérisé en ce que** la planification de trajectoire est exécutée sur un matériel insensible aux défaillances.

7. Procédé selon l'une quelconque des revendications 3 à 6, **caractérisé en ce que** l'instance de décision (150, 250) est exécutée sur un matériel insensible aux défaillances.

8. Procédé selon l'une quelconque des revendications 1 à 7, **caractérisé en ce qu'**une diversité de données des CFD est refusée et les données saisies par les capteurs sont transmises à plusieurs CFD.

9. Procédé selon l'une quelconque des revendications 1 à 8, **caractérisé en ce qu'**une diversité d'algorithmes des CFD est refusée et les mêmes algorithmes sont utilisés dans tous les CFD.

10. Procédé selon l'une quelconque des revendications 1 à 8, **caractérisé en ce que** la diversité de données est atteinte par l'utilisation de systèmes de coordonnées différents dans les processus de logiciel diversitaires.

11. Procédé selon l'une quelconque des revendications 1 à 10, **caractérisé en ce que** les unités modulaires, qui sont par exemple les ordinateurs de jonction, le système de communication, les capteurs, les actionneurs, de préférence toutes les unités modulaires, ont accès à un temps global insensible aux défaillances et le contrôle du flux de données entre les ordinateurs de jonction est dérivé de la progression du temps global.

12. Système électronique destiné à la commande d'un processus technique, qui est incorporé dans un environnement variable, sachant que le système électronique comprend des capteurs, notamment une pluralité de capteurs, des actionneurs et des ordinateurs de jonction, notamment une pluralité d'ordinateurs de jonction, qui échangent des données par le biais d'un système de communication en temps réel, sachant qu'un logiciel complexe et un logiciel simple sont prévus, sachant que le logiciel complexe est simultanément exécuté sur au moins deux chemins de flux de données (CFD) indépendants (110, 120), sachant que chaque CFD est agencé à cet effet pour observer de façon cyclique avec des capteurs le processus technique et l'environnement de celui-ci et établir au moyen d'algorithmes à partir des données observées, un modèle environnemental du processus technique, sachant que
- les données observées sont diversitaires et les algorithmes utilisés dans les CFD sont diversitaires, ou
- les données observées ne sont pas diversitaires et les algorithmes utilisés dans les CFD sont diversitaires, ou
- les données observées sont diversitaires et les algorithmes utilisés dans les CFD ne sont pas diversitaires, **caractérisé en ce que** pour le logiciel complexe, la probabilité de la survenance de défaillances de projet correspondant à ASIL.B et pour le logiciel simple, un taux de défaillances est atteint comme exigé par ASIL.D et
**en ce que** le logiciel simple est agencé pour établir, à partir de plusieurs modèles environnementaux différents, qui ont été déterminés par les CFD, un modèle environnemental consolidé unique pour la planification de trajectoire, sachant que le logiciel simple est exécuté sur un matériel insensible aux défaillances.
